# EUROPEAN PATENT SPECIFICATION

(11) **EP 3 005 822 B1**
(45) Date of publication and mention of the grant of the patent: **19.07.2017**
(21) Application number: 14727298.3
(22) Date of filing: 22.04.2014
(51) Int. Cl.: H04W 8/00, H04W 76/04, H04W 76/02

(54) **MAC LAYER TRANSPORT FOR WI-FI DIRECT SERVICES APPLICATION SERVICE PLATFORM WITHOUT INTERNET PROTOCOL**
MAC-SCHICHTTRANSPORT FÜR ANWENDUNGSDIENSTPLATTFORM FÜR DIREKTE WIFI-DIENSTE OHNE INTERNETPROTOKOLL
TRANSPORT À COUCHE MAC POUR PLATEFORME DE SERVICES D'APPLICATION DE SERVICES DIRECTS À WI-FI SANS PROTOCOLE INTERNET

(30) Priority: 24.05.2013 US 201361827375 P; 06.03.2014 US 201414199775
(43) Date of publication of application: 13.04.2016
(73) Proprietor: Qualcomm Incorporated, San Diego, CA 92121-1714 (US)
(72) Inventor: DAVIDSON, Andrew, Mackinnon, San Diego, CA 92121-1714 (US); HUANG, Xiaolong, San Diego, CA 92121-1714 (US); SANDHU, Shivraj, Singh, San Diego, CA 92121-1714 (US)
(74) Representative: Klang, Alexander H.
(86) International application number: PCT/US2014/035022
(87) International publication number: WO 2014/189641

(56) References cited:
- WO-A1-2011/056878
- US-A1- 2013 034 082
- Wi-Fi Alliance: "Wi-Fi CERTIFIED Wi-Fi Direct", , 1 October 2010 (2010-10-01), pages 1-14, XP055041124, Retrieved from the Internet: URL:http://www.wi-fi.org/knowledge-center/ white-papers/wi-fi-certified-wi-fi-direct% E2%84%A2-personal-portable-wi-fi%C2%AE-con nect-devices [retrieved on 2012-10-16]

## Description

### TECHNICAL FIELD

This disclosure relates to techniques for supporting service discovery and session creation using Wi-Fi.

### BACKGROUND

Recently, there has been a move to support wireless communication without the use of a wireless access point. The Wi-Fi Direct standard, currently under development by the Wi-Fi Alliance, is one standard that supports communication between two or more devices without the need for a wireless access point. Wi-Fi Direct may also enable Wi-Fi devices to easily connect and communicate with each other over an encrypted wireless communication channel without the need for a complicated setup process. Devices that communicate over Wi-Fi Direct may offer and seek services, such as print services, serial communication services (e.g., Universal Serial Bus (USB) over wireless services), docking services, storage services, etc., so that one device may wirelessly use capabilities of another device. The Wi-Fi Alliance has been developing a stack of protocols, referred to as an Application Service Platform (ASP), which allows devices communicating using WFD to advertise and seek out these services. Attention is drawn to document US 2013/034082 A1 which relates to systems for opportunistically transitioning service flows of mobile devices between being direct and indirect. A proximity between first and second mobile devices that are in wireless communication with each other may be monitored. A selective transition of a service flow between the first and second mobile devices from being indirect through the radio network access node using a first radio access technology (RAT) to being direct using a second RAT may be facilitated, e.g., responsive to a determination that a first criterion has been met. A selective transition of the service flow from being direct using the second RAT to being indirect using the first RAT may be facilitated, e.g., responsive to a determination that a second criterion has been met.

### SUMMARY

In accordance with the present invention, a method as set forth in claim 1, a non-transitory computer-readable storage medium as set forth in claim 9, and an apparatus as set forth in claim 10, is provided. Further embodiments are claimed in the dependent claims. In one example, this disclosure describes a method that comprises establishing, by a first wireless computing device, a Wi-Fi Direct Services (WFDS) connection to a second wireless computing device via a wireless communication channel, and responsive to establishing the WFDS connection, establishing, by the first wireless computing device, a WFDS Application Service Platform (ASP) session between the first wireless computing device and the second wireless computing device. The ASP session uses data link layer communications based on media access control (MAC) addresses via the WFDS connection, and does not use internet protocol (IP) communications. The method further comprises: responsive to establishing the ASP session, communicating, by the first wireless computing device to the second wireless computing device, using the ASP session.

In another example, this disclosure describes a first wireless computing device. The first wireless computing device further comprises a memory and at least one processor. The at least one processor is configured to: establish a Wi-Fi Direct Services (WFDS) connection to a second wireless computing device via a wireless communication channel, responsive to establishing the WFDS connection, and establish a WFDS Application Service Platform (ASP) session between the first wireless computing device and the second wireless computing device. The ASP session uses data link layer communications based on media access control (MAC) addresses via the WFDS connection, and does not use internet protocol (IP) communications. Responsive to establishing the ASP session, the at least one processor is further configured to communicate to the second wireless computing device, using the ASP session

In another example, a non-transitory computer-readable storage medium includes instructions stored thereon that, when executed, cause at least one processor of a first wireless computing device to establish a Wi-Fi Direct Services (WFDS) connection to a second wireless computing device via a wireless communication channel, and responsive to establishing the WFDS connection, establish a WFDS Application Service Platform (ASP) session between the first wireless computing device and the second wireless computing device. The ASP session uses data link layer communications based on media access control (MAC) addresses via the WFDS connection, and does not use internet protocol (IP) communications. The instructions, when executed, further cause the at least one processor to: responsive to establishing the ASP session, communicate to the second wireless computing device using the ASP session.

In another example, an apparatus includes means for establishing, by a first wireless computing device, a Wi-Fi Direct Services (WFDS) connection to a second wireless computing device via a wireless communication channel, means for establishing, by the first wireless computing device, a WFDS Application Service Platform (ASP) session between the first wireless computing device and the second wireless computing device responsive to establishing the WFDS connection. The ASP session uses data link layer communications based on media access control (MAC) addresses via the WFDS connection, and does not use internet protocol (IP) communications. The apparatus further includes means for communicating, by the first wireless computing device to the second wireless computing device, using the ASP session responsive to establishing the ASP session.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a conceptual diagram illustrating communication using a wireless communication channel between a first wireless computing device and a second wireless computing device in accordance with the techniques of this disclosure.
FIG. 2 is a conceptual diagram illustrating an example wireless communications stack based on an Application Service Platform (ASP) operating over Wi-Fi Direct Services wireless communications, in accordance with the techniques of this disclosure.
FIG. 3 is a communication diagram illustrating a call flow for using ASP to communicate between a first wireless computing and a second wireless computing device using data link layer communications based on media access control (MAC) addresses in accordance with the techniques of this disclosure.
FIG. 4 is a conceptual diagram illustrating a data link layer packet based on MAC addresses in accordance with the techniques of this disclosure.
FIG. 5 is a flowchart illustrating an example method for communicating using ASP without IP in accordance with one or more examples of this disclosure.

### DETAILED DESCRIPTION

This disclosure includes descriptions of wireless communication techniques, protocols, methods, and devices applicable to a system environment in which devices compatible with a Wi-Fi Direct Docking Service (WFDS) Application Service Platform (ASP) may function using a link-layer protocol based on media access control (MAC) addresses without the use of internet protocol (IP). An ASP is generally a wireless communications stack that may enable devices to easily advertise, seek and provide services over a wireless network, such as a Wi-Fi Direct certified network. The wireless stack forming the ASP may be implemented to comply with Wi-Fi Direct certification. The remainder of this disclosure makes regular reference to the Wi-Fi Direct ASP. In various examples, a WFD ASP stack may also be implemented in accordance with WiGig and/or one or more of the Institute of Electrical and Electronics Engineers (IEEE) 802.11 set of standards (e.g., 802.11, 802.11a, 802.11b, 802.11g, 802.1 In, 802.11ac, 802.11 ad, etc.), or extensions of Wi-Fi, WiGig, and/or one or more 802.11 standards.

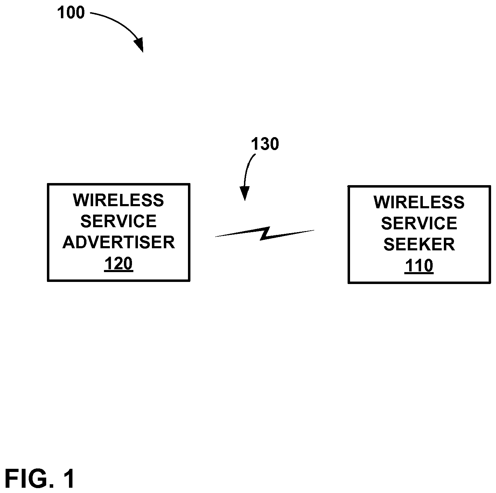

FIG. 1 is a conceptual diagram illustrating communication using a wireless communication channel between a first wireless computing device and a second wireless computing device in accordance with the techniques of this disclosure. In the example of FIG. 1, a wireless system includes a first wireless computing device, which may correspond to wireless service seeker 110 and a second wireless computing device, which may correspond to wireless service advertiser 120. Wireless service seeker 110 and wireless service advertiser 120 may communicate with wireless service advertiser 120 using wireless communication channel 130.

Wireless service advertiser 120 may comprise a wireless computing device configured for wireless communications. Wireless service seeker 110 and wireless service advertiser 120 may each comprise a mobile device such as a smartphone or other mobile handset, a tablet computer, a laptop computer, or another electronic device. Wireless service seeker 110 and wireless service advertiser 120 may also be components of a larger device or system. For example, wireless service seeker 110 may be a processor, a processing core, a chipset, or other one or more integrated circuits.

Wireless communication channel 130 may comprise any channel capable of propagating wireless communication signals between wireless service seeker 110 and wireless service advertiser 120. In some examples, wireless communication channel 130 may be implemented in radio frequency communications in frequency bands such as the 2.4 gigahertz (GHz) band, the 5 GHz band, the 60 GHz band, or other frequency bands. In some examples, wireless communication channel 130 may comply with one or more sets of standards, protocols, or technologies among Wi-Fi (as promoted by the Wi-Fi Alliance), WiGig (as promoted by the Wireless Gigabit Alliance), and/or the Institute of Electrical and Electronics Engineers (IEEE) 802.11 set of standards (e.g., 802.11, 802.11 a, 802.11b, 802.11g, 802.11n, 802.11ac, 802.11ad, etc.), or other standards, protocols, or technologies. The frequency bands used for wireless communication channel 130, such as the 2.4 GHz, 5 GHz, and 60 GHz bands, may be defined for purposes of this disclosure as they are understood in light of the standards of Wi-Fi, WiGig, any one or more IEEE 802.11 protocols, and/or other applicable standards or protocols.

Wireless service seeker 110 may establish communication with wireless service advertiser 120 over wireless communication channel 130 automatically once wireless service seeker 110 and wireless service advertiser 120 come within operative communication range of each other, or manually in response to a user input, in different examples.

In some examples, wireless service seeker 110 and wireless service advertiser 120 may establish with a connection with each other using Wi-Fi Direct features, referred to as ASP "Peer-to-Peer" (P2P) communications. ASP P2P communications allow wireless service advertiser 120 and wireless service seeker 110 to setup a secure communication channel when wireless service advertiser 120 and wireless service seeker 110 come within operative communication range of each other.

When performing ASP P2P communications, wireless communication devices transmit out a series of messages that include the capabilities of the sending device. The wireless communication devices then negotiate a device that should serve as the "Group Owner" (GO). Responsive to negotiating which device should serve as the GO, the GO configures itself into an access point, and sends an SSID (service set identification) and a Wi-Fi direct identifier to other devices that wish to connect with the GO.

Other devices, referred to as P2P clients, which do not serve as the GO then connect to the SSID of the GO to establish a secure communication channel. The P2P clients may receive the beacon communications and attempt to negotiate a set of parameters with the GO in order to establish a P2P group. In some examples, the P2P GO may comprise wireless service advertiser 120 and the P2P client may comprise wireless service seeker 110 or vice versa. The P2P communications may comprise data link layer-based (e.g. MAC address-based) communications in some examples.

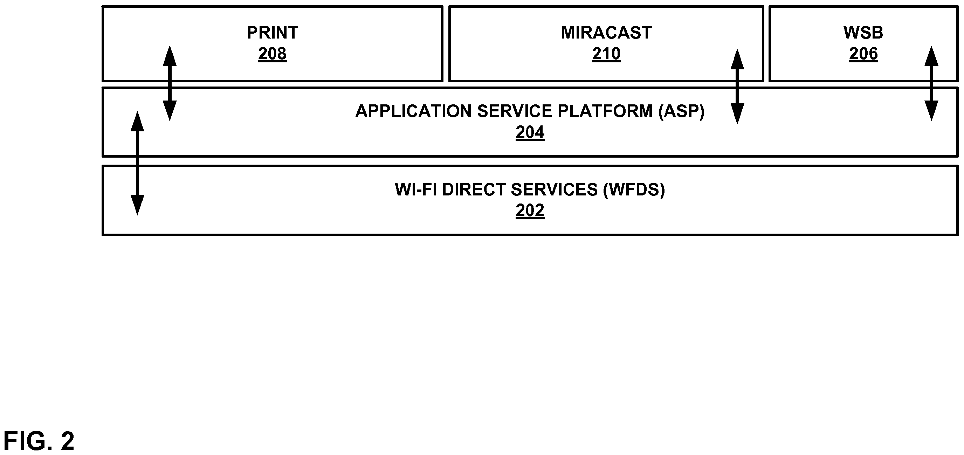

Responsive to wireless service advertiser 120 and wireless service seeker 110 establishing a secure communication channel using ASP P2P, wireless service advertiser 120 may advertise one or more wireless services that wireless service advertiser 120 offers using application service platform (ASP). Wireless service seeker 110 and wireless service advertiser 120 may both use the ASP to manage communications with each other for a variety of services, as illustrated in FIG. 2, as well as other services. The ASP may allow wireless service seeker 110 and wireless service advertiser 120 to easily setup, teardown, and manage an ASP session using special ASP messages, referred to as ASP "primitives."

Responsive to wireless service seeker 110 discovering that wireless service advertiser 120 is offering a particular service using the ASP, wireless service seeker 110 may easily connect to the service and establish a session of the service with wireless service advertiser 120 using ASP primitive-based communications. By using ASP over WFD, wireless service advertiser 120 and wireless service seeker 110 may provide a platform that facilitates the advertisement of, session creation, and management of various services.

However, in some instances, it may be advantageous for wireless service seeker 110 and wireless service advertiser 120 to establish a communication channel, e.g. communication channel 130 using wireless communications based on machine access code (MAC) addresses that do not use Internet Protocol (IP) communications. MAC addresses are a type of network address. A hardware manufacturer typically assigns a MAC address to network interface controllers (NICs) when the NIC is being manufactured by setting a value in firmware or via some other mechanism. A wireless computing device may utilize the MAC address of the NIC as part of so-called data link layer communications. Data link layer communications (also referred to as "link layer communications") comprise a layer of the open systems interconnection (OSI) model.

In some examples, a first wireless computing device, such as wireless service advertiser 120 or wireless service seeker 110, which has a wireless NIC that supports the IEEE 802.11x family of protocols, may identify a second, different wireless computing device based on the data link layer MAC address of the second wireless computing device. Thus, the first and second wireless computing devices may use MAC addresses for performing data link layer communications.

Some communication protocols, such as internet protocol (IP) for example, may utilize additional addresses at the so-called "network layer" to identify computing devices. The network layer is a layer of the OSI model that has a greater level of abstraction as compared to the data link layer. However, in some instances, e.g. when using Wi-Fi Direct-based communications, it may be undesirable from a performance standpoint for wireless computing devices to communicate using IP-based communications when using ASP to support establishing sessions of wireless services. Accordingly, this disclosure describes techniques for performing WFDS ASP communications without using IP based communications.

In an example in accordance with the techniques of this disclosure, service seeker 110 may comprise a first wireless computing device, and may establish a Wi-Fi Direct Service (WFDS) connection to a second wireless computing device, e.g. corresponding to service advertiser 120 via a wireless communication channel, such as wireless communication channel 130. Responsive to establishing the WFDS connection, wireless service seeker 110 may establish a WFDS Application Service Platform (ASP) session with wireless service advertiser 120 The ASP session uses data link layer communications based on media access control (MAC) addresses via the WFDS connection, and does not use internet protocol (IP) communications. Responsive to establishing the establishing the ASP session, wireless service seeker 110 may communicate with wireless service advertiser 120 using the ASP session.

FIG. 2 is a conceptual diagram illustrating an example wireless communications stack based on an Application Service Platform (ASP) operating over WFDS wireless communications, in accordance with the techniques of this disclosure. The communication stack of FIG. 2 includes Wi-Fi Direct Services (WFDS) wireless communications 202, which may support an application service platform (204). Application service platform 204 may support a wireless serial protocol, such as Wi-Fi Serial Bus (WSB) 206, a print service 208, and a Miracast service 210. Wireless service advertiser 120 and wireless service seeker 110 may establish an ASP session using data link layer communications based on MAC addresses. The link layer communications do not use IP, and may facilitate the creation of a session of print service 208, Miracast service 210, and/or WSB service 206.

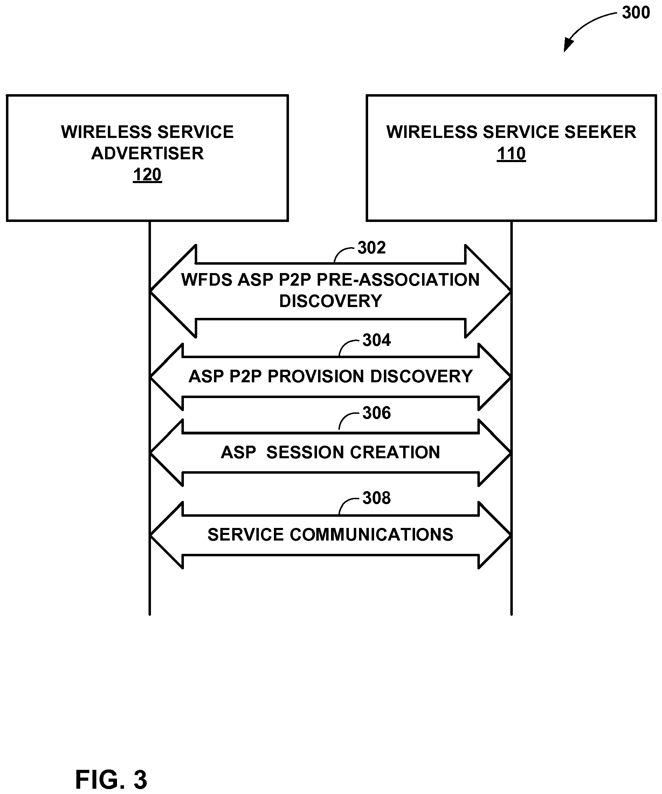

WFDS communications 202 are example of wireless communications over which ASP 204 may operate. A wireless computing device, e.g. wireless service advertiser 120 may advertise services using the ASP 204, including a Send service, a Play service, and potentially other services, such as WSB 206. Each of these services may have an application running on them. One or more devices, such as wireless service advertiser 120 and wireless service seeker 110, may advertise, utilize, seek, and/or manage each of these services via the ASP 204. ASP 204 may manage aspects of WSB 206, print service 208, and Miracast service 210. For example, ASP 204 may mange ASP sessions for WSB 206, print service 208, and Miracast service 210 using ASP Coordination protocol, as further depicted in FIG. 3.

Wireless service advertiser 120 and wireless service seeker 110 may establish a session using ASP 204 responsive to establishing a session using WFD. Once established, wireless service seeker 110 and wireless service advertiser 120 may communicate with each other to determine which services wireless service advertiser 120 is offering. For examples, wireless service seeker 110 may send a message via wireless channel 130 requesting a list of services that wireless service advertiser 120 provides. Alternatively, wireless service advertiser 120 may transmit a message indicating a service that wireless service advertiser 120 provides, e.g. print service 208, Miracast service 210, and/or WSB service 206.

Wireless service seeker 110 and wireless service advertiser 120 may communicate using a series of ASP primitives, which are a set ASP coordination protocol messages. In accordance with the techniques of this disclosure, wireless service seeker 110 and wireless service advertiser 120 may communicate by transmitting ASP primitives using data link layer communications based on MAC addresses to identify the wireless computing devices. The ASP session in accordance with the techniques of this disclosure does not utilize IP communications.

FIG. 3 is a communication diagram illustrating a call flow for using WFDS ASP to communicate between a first wireless computing and a second wireless computing device using data link layer communications based on MAC addresses in accordance with the techniques of this disclosure. In the example of FIG. 3, wireless service advertiser 120 and wireless service seeker 110 may exchange wireless communications with each other using WFDS for the purpose advertising, seeking, establishing, operating, and/or tearing down a wireless service session with each other using Application Service Platform (ASP).

In the example of FIG. 3, wireless service advertiser 120 and wireless service seeker 110 may be communicatively coupled using wireless communication channel 130 (FIG. 1). Wireless service advertiser 120 and wireless service seeker 110 may establish communications a WFDS connection to support wireless communication over wireless communication channel 130.

In some examples in accordance with the techniques of this disclosure, the WFDS connection may comprise a data link layer connection. The data link layer connection may support transmission of packets in accordance with the IEEE 802.1x wireless data link layer standards. More particularly, wireless service advertiser 120 and wireless service seeker 110 may communicate by sending packets that include source and destination MAC addresses that identify wireless adapters of wireless service advertiser 120 and wireless service seeker 110, and that do not use IP communications.

Once wireless service advertiser 120 and wireless service seeker 110 establish a WFDS connection over wireless communication channel 130 as described above with respect to FIG. 1, wireless service advertiser 120 and wireless service seeker 110 may communicate with each other using protocols that support plaintext payloads. Examples of such protocols include service oriented access protocol (SOAP), and General Event Notification Architecture (GENA). Wireless service advertiser 120 and wireless service seeker 110 may communicate using SOAP and GENA to advertise, and seek services using ASP, as well as to create a communication session for a service, such as WSB service 206, print service 208, and/or Miracast service 210.

Wireless service advertiser 120 and wireless service seeker 110 engage in communications in accordance with call flow 300 to setup a session for a service, such as a WSB service using ASP. In general, wireless service seeker 110 and wireless service advertiser first conduct pre-association discovery, also referred to as probe exchange discovery, to determine if a service requested by wireless service seeker 110 is advertised by wireless service advertiser 120 and to negotiate connection capabilities and parameters. If the requested service is available, wireless service advertiser 120 and wireless service seeker 110 may engage in connection provisioning to setup parameters for an ASP connection. Wireless service advertiser 120 and wireless service seeker 110 finally create and manage (e.g., open and close) and an ASP session using the ASP Coordination protocol based on the agreed upon ASP provisioning parameters. The ASP communications between wireless service requester 110 and wireless service advertiser 120 may use ASP coordination protocol data link layer communications based on MAC addresses (e.g. of wireless service advertiser 120 and wireless service seeker 110), and which do not utilize IP communications, in accordance with the techniques of this disclosure.

The WFDS ASP communications of call flow 300 may begin with wireless service seeker 110 requesting a particular service from wireless service advertiser 120 in an initial round of service discovery, referred to as P2P Pre-Association Discovery (302). To request the service, wireless service seeker 110 may send a P2P Probe exchange Discovery request for the particular service to wireless service advertiser 120. Wireless service advertiser 120 receives and examines the request, which may include a hash of a service name that wireless service requester 110 is requesting. Wireless service advertiser 120 sends a response indicating whether wireless service advertiser 120 is advertising the requested service. If wireless service advertiser 120 supports the requested service, wireless service seeker 110 and wireless service advertiser 120 engage in additional P2P service discovery using service discovery requests, which further defines the parameters for the ASP session, including ASP messages, which may include the full name of the requested service.

After finishing P2P pre-association discovery, wireless service seeker 110 and wireless service advertiser 120 may engage in ASP session provisioning, which includes ASP P2P Provision Discovery (304). ASP session provisioning may define parameters, such as the protocol and protocol layer, that are to be used when managing (e.g., opening, closing using, etc.) an ASP session, as well as ASP connection parameters, including the GO for the connection, a group identifier, and an operating channel for wireless service seeker 110 and the wireless service advertiser 120 to use when communicating over wireless communication channel 130. In some examples, wireless service seeker 110 may transmit an ASP P2P Provision Discovery Request to engage in ASP communications using data link layer communications based on MAC addresses. Wireless service advertiser 120 may respond with an ASP P2P Provision Discovery Response message that indicates wireless service advertiser 120 supports ASP session communications, using ASP Coordination Protocol. The ASP communications may comprise data link layer communications based on MAC addresses that do not use IP communications.

More specifically, the ASP Provision Discovery Request may include a feature capability information element (IE). The feature capability element may further include a coordination protocol transport bitmask, which may identify the protocol that wireless service requester 110 and wireless service advertiser 120 may use to communicate. The coordination protocol transport bitmask may identify the protocol to use for ASP communications based on the value of the least significant 32 bits of the ASP Provision Discovery Request and the ASP Provision Discovery Response.

In order to negotiate a protocol to use for ASP communication, either wireless service seeker 110 or wireless service advertiser 120 transmits an ASP Provision Discovery Request that includes the Coordination Protocol Transport Bitmask to another wireless computing device, e.g. wireless service advertiser 120. Wireless service seeker 110 responds to the ASP Provision Discovery Request with an ASP Provision Discovery Response that also includes a value of the Coordination Protocol Transport Bitmask.

If the value of the coordination protocol transport bitmask is equal to 0x01, wireless service advertiser 120 and wireless service seeker 110 may communicate using IP. In accordance with the techniques of this disclosure, if the value of the coordination protocol transport bitmask in the ASP Provision Discovery Response is equal to 0x02, wireless service advertiser 120 and wireless service seeker 110 may communicate directly over a data link layer based on the MAC addresses of wireless service advertiser 120 and wireless service seeker 110, i.e. without using IP communications. Additional values of the coordination protocol transport bitmask are reserved for future use for other protocols. Table 1 illustrates some possible values of the Transport Coordination Protocol Bitmask in accordance with the techniques of this disclosure, although other values may be used in other examples.

**Table 1- Coordination Protocol Transport Bitmask Values**

| **PD Requestor: Feature Capability** | **PD Requestor: Feature Description** | **PD Responder: Valid Connection Response Feature Capability** | **ASP Action** |
|---|---|---|---|
| Coordination Protocol Transport Bitmask 0x00000000-0x000000FF | 0x01: IP Transport | 0x01: IP Transport | Both ASPs involved in this PD exchange shall use the transport indicated in the PD Response for all Coordination Protocol messaging between the two ASPs. |
| | 0x02: Directly over the MAC transport without IP | 0x02: Directly over the MAC transport without IP0x03- | |
| | 0x03-0x80: Reserved for future transports | 0x80: Reserved forfuture transports. | |
| | | The PD response for this field has a single transport bit set to 1, indicating a transport that is supported by both the PD Requestor and PD Responder. | |
| 0x00000100-0xFFFFFF00 | Reserved for future use | | |

Upon receiving an ASP Provision Discovery Request message that includes the coordination protocol transport bitmask IE attribute, wireless service advertiser 120 transmits an ASP Provision Discovery Response message to wireless service seeker 110 that includes the same coordination protocol bitmask value if wireless service advertiser 120 supports the protocol that wireless service requester specified in the Provision Discovery Request message. Wireless service seeker 110 may also transmit a Provision Discovery Response that includes a different value of the coordination protocol bitmask if wireless service seeker 110 does not support the protocol value indicated by the transport coordination protocol bitmask of the ASP Provision Discovery Response. Wireless service seeker 110 and wireless service advertiser 120 may utilize the protocol specified in the coordination protocol bitmask of the ASP Provision Discovery Response.

Finally, wireless service advertiser 120 and wireless service seeker 110 may create an ASP session (306) based on the connection parameters determined during the ASP connection provisioning using ASP Coordination protocol. To create an ASP session, wireless service seeker 110 transmits an ASP Request Session message, which wireless service advertiser 120 acknowledges with an acknowledgement (ACK) message. Wireless service seeker 110 then connects to the ASP session, and may begin ASP service communications (308).

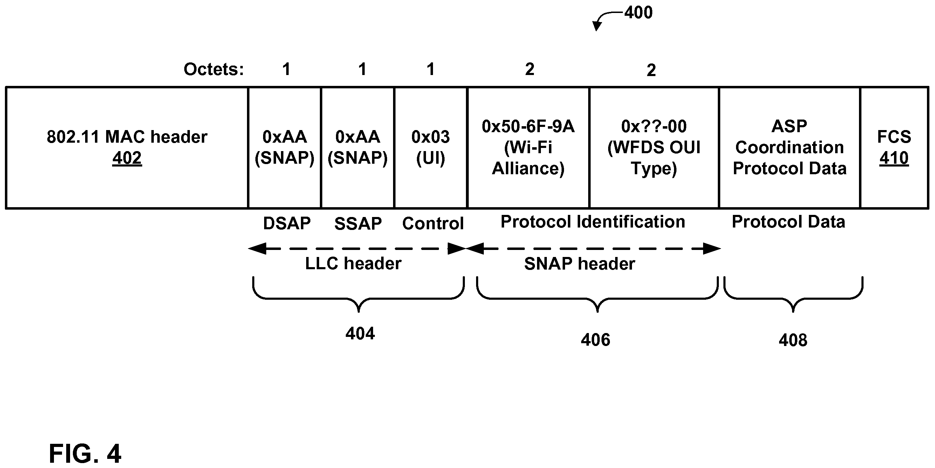

As discussed above, wireless service advertiser 120 and wireless service seeker 110 may communicate using ASP and/or the ASP Coordination protocol using data link layer communications based on MAC addresses. To perform ASP communications using data link layer communications based on MAC addresses, wireless service advertiser 120 and wireless service seeker 110 may transmit data packets to each other in a format that include a subnetwork access protocol (SNAP) header that identifies those packets as ASP packets. The ASP data link layer packets further include an organizational unique identifier (OUI) associated with the Wi-Fi Alliance, as well as an OUI that identifies the packets as Wi-Fi Direct Services (e.g., ASP or ASP Coordination Protocol) packets to other devices that support data link layer transmission of ASP packets based on MAC addresses. The packet format for data link layer ASP Coordination protocol communications USB communications is illustrated and described below in greater detail with respect to FIG. 4.

FIG. 4 is a conceptual diagram illustrating a data link layer packet based on MAC addresses in accordance with the techniques of this disclosure. FIG. 4 includes a packet 400, which includes an IEEE 802.11 MAC header 402, a logical link control (LLC) header 404, a subnetwork access protocol (SNAP) header 406, protocol data 408, and a frame check sequence (FCS) 410. The MAC header may include a source MAC address and a destination MAC address of the packet, e.g. the MAC addresses of wireless service advertiser 120 and wireless service seeker 110. Wireless service seeker 110 and wireless service advertiser 120 may transmit packets that have the format of FIG. 4 to perform ASP communications based on MAC addresses, and without using IP communications.

In various examples, LLC header 404 may further include a destination service access point (DSAP) field having value 0xAA, a source service access point (SSAP) header having value 0xAA, and a UI or control byte having value 0x03. As described above, SNAP header 406 includes two, two-octet-sized, OUI field values that identify packet 400 as being associated with data link layer communications based on MAC addresses. The first OUI field has value 0x50-6F-9A in some examples, and identifies packet 400 as a packet that is associated with the Wi-Fi Alliance. The second OUI field has a value of xx-00, where xx is any value between 00 and FF hexadecimal (00 and 255 binary) inclusive. The value of the second OUI field may be determined later as part of the ASP specification or another specification. In one example, a value of the second OUI field identifies packet 400 as being associated with the ASP protocol and using data link layer communications based on MAC addresses without the use of IP.

Data packet 400 further includes ASP Coordination protocol data 408, which may include messages, functions, events, commands, and payloads associated with the ASP Coordination protocol. ASP coordination Protocol Data may be of variable length depending on the message and the contents of the message being sent. FCS 410 comprises a checksum or a frame check sequence based on the contents of data packet 400, and allows wireless service advertiser 120 and wireless service seeker 110 to detect if data packet 400 becomes corrupted during data transmission.

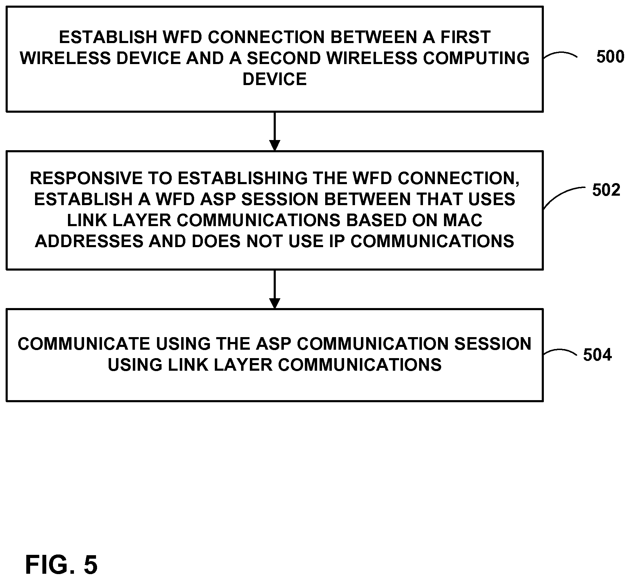

FIG. 5 is a flowchart illustrating an example method for communicating using ASP without IP in accordance with one or more examples of this disclosure. The method of FIG. 5 may correspond to some examples of actions performed by wireless service advertiser 120 or wireless service seeker 110 of FIG. 1, which implement data link layer communications based on MAC addresses in accordance with the techniques of this disclosure. In the method of FIG. 5, service seeker 110 may comprise a first wireless computing device, and may establish a Wi-Fi Direct (WFD) connection to a second wireless computing device, e.g. corresponding to service advertiser 120 via a wireless communication channel, such as wireless communication channel 130 (500). It should be understood that the first wireless computing device may comprise wireless service seeker 110 and the second wireless computing device may comprise wireless service advertiser 120 in other examples.

Responsive to establishing the WFD connection, Wireless service advertiser 120 may transmit a Wi-Fi Direct Services Application Service Platform (ASP) Discovery request to create an ASP session between wireless service seeker 110 and wireless service advertiser 120 (502). The ASP session uses data link layer communications based on media access control (MAC) addresses via the WFD connection, and does not use internet protocol (IP) communications. Responsive to establishing the ASP session, wireless service advertiser 120 may communicate to wireless service seeker 110 using the ASP session (504).

In some examples, communicating using the ASP session comprises encapsulating packets transmitted using the ASP session with a subnetwork access protocol (SNAP) header. The SNAP header may comprise a Wi-Fi Alliance organization specific identifier (OUI) value of 0x50-6F-9A, and a Wi-Fi Direct Services OUI value of xx-00, where xx is any number between 00 and 255 inclusive.

In some examples, to establish the ASP session, wireless service advertiser 120 may transmit an ASP message that includes an attribute that indicates the ASP session uses data link layer communications based on MAC addresses, and receive an ASP message that includes the attribute indicating the ASP session uses data link layer communications based on MAC addresses. The attribute may comprise a coordination protocol transport bitmask value, which may have a value equal to 0x02 in some examples.

In some examples, wireless service advertiser 120 may comprise a WFD group owner (GO), and wireless service seeker 110 may comprise a WFD client. In some examples, wireless service advertiser 120 may be further configured to form a WFD group with the WFD client. In yet another example, wireless service seeker 110 or wireless service advertiser 120 may establish the ASP session advertised by at least one of wireless service seeker 110 and wireless service advertiser 120.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. These and other examples are within the scope of the following claims.

## Claims

1. A method comprising:
establishing (500), by a first wireless computing device (110), a Wi-Fi Direct Services, WFDS connection to a second wireless computing device (120) via a wireless communication channel (130);
responsive to establishing (500) the WFDS connection, establishing (502), by the first wireless computing device (110), a WFDS Application Service Platform, ASP, session between the first wireless computing device (110) and the second wireless computing device (120),
wherein the ASP session uses ASP coordination protocol data link layer communications based on media access control, MAC, addresses via the WFDS connection, and does not use internet protocol, IP, communications; and
responsive to establishing (502) the ASP session, communicating (504), by the first wireless computing device (110) to the second wireless computing device (120), using the ASP session,
wherein establishing the ASP session further comprises establishing the ASP session for a wireless service advertised by one of the first wireless computing device (110) and the second wireless computing device (120).

2. The method of claim 1, wherein communicating using the ASP (204) session comprises encapsulating packets transmitted using the ASP session with a subnetwork access protocol, SNAP, header.

3. The method of claim 2, wherein the SNAP header comprises a Wi-Fi Alliance organization specific identifier, OUI, value of 0x50-6F-9A, and a Wi-Fi Direct Services OUI value of xx-00, where xx is any number between 00 and 255 inclusive.

4. The method of claim 1, wherein establishing the ASP session further comprises transmitting, from the first wireless computing device (110) to the second wireless computing device (120), an ASP message that includes an attribute that indicates the ASP session uses data link layer communications based on MAC addresses; and
receiving, by the first wireless computing device (110) from the second wireless computing device (120), an ASP message that includes the attribute indicating the ASP session uses data link layer communications based on MAC addresses.

5. The method of claim 4,
wherein the attribute comprises a coordination protocol transport bitmask value.

6. The method of claim 5, wherein the transport bitmask value is equal to 0x02.

7. The method of claim 1, wherein at least one of the first wireless computing device (110) and the second wireless computing device (120) comprises a WFDS group owner, GO, and the second wireless computing device (120) comprises a WFDS client.

8. The method of claim 7, further comprising:
forming, by the WFDS GO, a WFDS group with the WFDS client.

9. A non-transitory computer-readable storage medium that includes instructions stored thereon that, when executed, cause at least one processor of a first wireless computing device to perform the method of any one of claims 1 to 8.

10. An apparatus comprising:
means for establishing, by a first wireless computing device (110), a Wi-Fi Direct Services, WFDS, connection to a second wireless computing device (120) via a wireless communication channel (130);
means for establishing, by the first wireless computing device (110), a WFDS Application Service Platform, ASP, session between the first wireless computing device (110) and the second wireless computing device (120) responsive to establishing the WFDS connection,
wherein the ASP session uses ASP coordination protocol data link layer communications based on media access control, MAC, addresses via the WFDS connection, and does not use internet protocol, IP, communications; and
means for communicating, by the first wireless computing device (110) to the second wireless computing device (120), using the ASP session responsive to establishing the ASP session,
wherein the means for establishing the ASP session further comprises means for establishing the ASP session for a wireless service advertised by one of the first wireless computing device (110) and the second wireless computing device (120).

11. The apparatus of claim 10, wherein the means for communicating using the ASP session comprises means for encapsulating packets transmitted using the ASP session with a subnetwork access protocol, SNAP, header.

12. The apparatus of claim 11, wherein the SNAP header comprises a Wi-Fi Alliance organization specific identifier, OUI, value of 0x50-6F-9A, and a Wi-Fi Direct Services OUI value of xx-00, where xx is any number between 00 and 255 inclusive.

13. The apparatus of claim 10, wherein the means for establishing the ASP session further comprises means for transmitting, from the first wireless computing device (110) to the second wireless computing device (120), an ASP message that includes an attribute that indicates the ASP session uses data link layer communications based on MAC addresses; and
means for receiving, by the first wireless computing device (110) from the second wireless computing device (120), an ASP message that includes the attribute indicating the ASP session uses data link layer communications based on MAC addresses.

14. The apparatus of claim 10, wherein at least one of the first wireless computing device (110) and the second wireless computing device (120) comprises a WFDS group owner, GO, and the second wireless computing device (120) comprises a WFDS client.

15. The apparatus of claim 14, further comprising:
means for forming, by the WFDS GO, a WFDS group with the WFDS client.

## Patentansprüche

1. Ein Verfahren, das Folgendes aufweist:
Einrichten (500), durch eine erste Drahtlosrechnereinrichtung (110), einer Wi-Fi-Direct-Services- bzw. WFDS-Verbindung mit einer zweiten Drahtlosrechnereinrichtung (120) über einen Drahtloskommunikationskanal (130);
ansprechend auf das Einrichten (500) der WFDS-Verbindung, Einrichten (502), durch die erste Drahtlosrechnereinrichtung (110), einer WFDS-Anwendungsdienstplattform- bzw. WFDS-ASP-Sitzung (ASP = Application Service Platform) zwischen der ersten Drahtlosrechnereinrichtung (110) und der zweiten Drahtlosrechnereinrichtung (120),
wobei die ASP-Sitzung ASP-Koordinationsprotokoll-Datenverbindungsschichtkommunikationen basierend auf Medienzugriffssteuerungs- bzw. MAC-Adressen (MAC = media access control) über die WFDS-Verbindung verwendet und nicht Internetprotokoll- bzw. IP-Kommunikationen verwendet; und
ansprechend auf das Einrichten (502) der ASP-Sitzung, Kommunizieren (504), durch die erste Drahtlosrechnereinrichtung (110), mit der zweiten Drahtlosrechnereinrichtung (120) unter Verwendung der ASP-Sitzung,
wobei das Einrichten der ASP-Sitzung weiter Einrichten der ASP-Sitzung für einen Drahtlosdienst aufweist, der durch die erste Drahtlosrechnereinrichtung (110) oder die zweite Drahtlosrechnereinrichtung (120) bekanntgegeben wird.

2. Verfahren nach Anspruch 1, wobei das Kommunizieren unter Verwendung der ASP-Sitzung (204) Verkapseln von Paketen aufweist, die unter Verwendung der ASP-Sitzung gesendet werden, und zwar mit einem Subnetzwerkzugriffsprotokoll- bzw. SNAP-Header (SNAP = subnetwork access protocol).

3. Verfahren nach Anspruch 2, wobei der SNAP-Header einen Wert eines Wi-Fi-Alliance-Organization-spezifischen Identifikators bzw. Wi-Fi-Alliance-OUI-Wert von 0x50-6F-9A und einen Wi-Fi-Direct-Services-OUI-Wert von xx-00 aufweist, wobei xx irgendeine Zahl zwischen 00 und einschließlich 255 ist.

4. Verfahren nach Anspruch 1, wobei das Einrichten der ASP-Sitzung weiter Senden, von der ersten Drahtlosrechnereinrichtung (110) an die zweite Drahtlosrechnereinrichtung (120), einer ASP-Nachricht aufweist, die ein Attribut beinhaltet, das anzeigt, dass die ASP-Sitzung Datenverbindungsschichtkommunikationen, die auf MAC-Adressen basieren, verwendet; und Empfangen, durch die erste Drahtlosrechnereinrichtung (110) von der zweiten Drahtlosrechnereinrichtung (120), einer ASP-Nachricht, die das Attribut beinhaltet, das anzeigt, dass die ASP-Sitzung Datenverbindungsschichtkommunikationen basierend auf MAC-Adressen verwendet.

5. Verfahren nach Anspruch 4,
wobei das Attribut einen Koordinationsprotokolltransportbitmaskenwert aufweist.

6. Verfahren nach Anspruch 5, wobei der Transportmaskenbitwert gleich 0x02 ist.

7. Verfahren nach Anspruch 1, wobei die erste Drahtlosrechnereinrichtung (110) und/oder die zweite Drahtlosrechnereinrichtung (120) einen WFDS-Gruppeneigner bzw. -GO (GO = group owner) aufweisen und die zweite Drahtlosrechnereinrichtung (120) einen WFDS-Client aufweist.

8. Verfahren nach Anspruch 7, das weiter Folgendes aufweist: Bilden, durch den WFDS-GO, einer WFDS-Gruppe mit dem WFDS-Client.

9. Ein nicht transitorisches, computerlesbares Speichermedium, das darauf gespeicherte Instruktionen beinhaltet, die, wenn sie ausgeführt werden, wenigstens einen Prozessor einer ersten Drahtlosrechnereinrichtung veranlassen, das Verfahren nach einem der Ansprüche 1 bis 8 durchzuführen.

10. Eine Vorrichtung, die Folgendes aufweist:
Mittel zum Einrichten, durch eine erste Drahtlosrechnereinrichtung (110), einer Wi-Fi-Direct-Services- bzw. WFDS-Verbindung mit einer zweiten Drahtlosrechnereinrichtung (120) über einen Drahtloskommunikationskanal (130);
Mittel zum Einrichten (500), durch die erste Drahtlosrechnereinrichtung (110), einer WFDS-Anwendungsdienstplattform- bzw. WFDS-ASP-Sitzung (ASP = Application Service Platform) zwischen der ersten Drahtlosrechnereinrichtung (110) und der zweiten Drahtlosrechnereinrichtung (120), ansprechend auf das Einrichten der WFDS-Verbindung,
wobei die ASP-Sitzung ASP-Koordinationsprotokoll-Datenverbindungsschichtkommunikationen basierend auf Medienzugriffssteuerungs- bzw. MAC-Adressen (MAC = media access control) über die WFDS-Verbindung verwendet und nicht Internetprotokoll- bzw. IP-Kommunikationen verwendet; und
Mittel zum Kommunizieren, durch die erste Drahtlosrechnereinrichtung (110), mit der zweiten Drahtlosrechnereinrichtung (120), unter Verwendung der ASP-Sitzung ansprechend auf das Einrichten der ASP-Sitzung,
wobei die Mittel zum Einrichten der ASP-Sitzung weiter Mittel aufweisen zum Einrichten der ASP-Sitzung für einen Drahtlosdienst, der durch die erste Drahtlosrechnereinrichtung (110) oder die zweite Drahtlosrechnereinrichtung (120) bekanntgegeben wird.

11. Vorrichtung nach Anspruch 10, wobei die Mittel zum Kommunizieren unter Verwendung der ASP-Sitzung Mittel aufweisen zum Verkapseln von Paketen, die unter Verwendung der ASP-Sitzung gesendet werden, und zwar mit einem Subnetzwerkzugriffsprotokoll- bzw. SNAP-Header (SNAP = subnetwork access protocol).

12. Vorrichtung nach Anspruch 11, wobei der SNAP-Header einen Wert eines Wi-Fi-Alliance-Organization-spezifischen Identifikators bzw. Wi-Fi-Alliance-OUI-Wert von 0x50-6F-9A und einen Wi-Fi-Direct-Services-OUI-Wert von xx-00 aufweist, wobei xx irgendeine Zahl zwischen 00 und einschließlich 255 ist.

13. Vorrichtung nach Anspruch 10, wobei die Mittel zum Einrichten der ASP-Sitzung weiter Mittel aufweisen zum Senden, von der ersten Drahtlosrechnereinrichtung (110) an die zweite Drahtlosrechnereinrichtung (120), einer ASP-Nachricht, die ein Attribut beinhaltet, das anzeigt, dass die ASP-Sitzung Datenverbindungsschichtkommunikationen, die auf MAC-Adressen basieren, verwendet; und
Mittel zum Empfangen, durch die erste Drahtlosrechnereinrichtung (110) von der zweiten Drahtlosrechnereinrichtung (120), einer ASP-Nachricht, die das Attribut beinhaltet, das anzeigt, dass die ASP-Sitzung Datenverbindungsschichtkommunikationen basierend auf MAC-Adressen verwendet.

14. Vorrichtung nach Anspruch 10, wobei die erste Drahtlosrechnereinrichtung (110) und/oder die zweite Drahtlosrechnereinrichtung (120) einen WFDS-Gruppeneigner bzw. -GO (GO = group owner) aufweist und die zweite Drahtlosrechnereinrichtung (120) einen WFDS-Client aufweist.

15. Vorrichtung nach Anspruch 14, die weiter Folgendes aufweist:
Mittel zum Bilden, durch den WFDS-GO, einer WFDS-Gruppe mit dem WFDS-Client.

## Revendications

1. Procédé comprenant :
établir (500), par un premier dispositif informatique (110), une connexion de Services Wi-Fi Directs, WFDS, vers un deuxième dispositif informatique sans fil (120) par l'intermédiaire d'un canal de communication sans fil (130) ;
en réponse à l'établissement (500) de la connexion WFDS, établir (502), par le premier dispositif informatique sans fil (110), une session de Plate-forme de Service d'Application WFDS, ASP, entre le premier dispositif informatique sans fil (110) et le deuxième dispositif informatique sans fil (120),
dans lequel la session ASP utilise des communications de couche de liaison de données de protocole de coordination ASP basées sur des adresses de contrôle d'accès au support, MAC, par l'intermédiaire de la connexion WFDS, et n'utilise pas de communications au protocole Internet, IP ; et
en réponse à l'établissement (502) de la session ASP, communiquer (504), par le premier dispositif informatique sans fil (110) vers le deuxième dispositif informatique sans fil (120), en utilisant la session ASP,
dans lequel l'établissement de la session ASP comprend en outre l'établissement de la session ASP pour un service sans fil annoncé par l'un du premier dispositif informatique sans fil (110) et du deuxième dispositif informatique sans fil (120).

2. Procédé selon la revendication 1, dans lequel la communication utilisant la session ASP (204) comprend l'encapsulation de paquets émis en utilisant la session ASP avec un en-tête de protocole d'accès de sous-réseau, SNAP.

3. Procédé selon la revendication 2, dans lequel l'en-tête SNAP comprend une valeur d'identifiant spécifique de l'organisation Wi-Fi Alliance, OUI, 0x50-6F-9A, et une valeur OUI de Services Wi-Fi Directs de xx-00, xx étant un nombre quelconque compris entre 00 et 255 de façon inclusive.

4. Procédé selon la revendication 1, dans lequel l'établissement de la session ASP comprend en outre l'émission, à partir du premier dispositif informatique sans fil (110) vers le deuxième dispositif informatique sans fil (120), d'un message ASP qui comprend un attribut qui indique que la session ASP utilise des communications de couche de liaison de données basées sur des adresses MAC ; et
recevoir, par le premier dispositif informatique sans fil (110) à partir du deuxième dispositif informatique sans fil (120), un message ASP qui comprend l'attribut indiquant que la session ASP utilise des communications de couche liaison de données basées sur des adresses MAC.

5. Procédé selon la revendication 4, dans lequel l'attribut comprend une valeur de masque de bits de transport de protocole de coordination.

6. Procédé selon la revendication 5, dans lequel la valeur de masque de bits de transport est égale à 0x02.

7. Procédé selon la revendication 1, dans lequel au moins l'un du premier dispositif informatique sans fil (110) et du deuxième dispositif informatique sans fil (120) comprend un propriétaire de groupe WFDS, GO, et le deuxième dispositif informatique sans fil (120) comprend un client WFDS.

8. Procédé selon la revendication 7, comprenant en outre :
former, par le WFDS GO, un groupe WFDS avec le client WFDS.

9. Support de stockage non transitoire lisible par un ordinateur qui comprend des instructions mémorisées sur lui, instructions qui lorsqu'elles sont exécutées, amènent au moins un processeur d'un premier dispositif informatique sans fil à réaliser le procédé de l'une quelconque des revendications 1 à 8.

10. Dispositif comprenant :
des moyens pour établir, par un premier dispositif informatique sans fil (110), une connexion de Services Wi-Fi Directs, WFDS, vers un deuxième dispositif informatique sans fil (120) par l'intermédiaire d'un canal de communication sans fil (130) ;
des moyens pour établir, par le premier dispositif informatique sans fil (110), une session de Plate-forme de Service d'Application WFDS, ASP, entre le premier dispositif informatique sans fil (110) et le deuxième dispositif informatique sans fil (120) en réponse à l'établissement de la connexion WFDS,
dans lequel la session ASP utilise des communications de couche de liaison de données de protocole de coordination ASP basées sur des adresses de contrôle d'accès au support, MAC, par l'intermédiaire de la connexion WFDS, et n'utilise pas de communications au protocole Internet, IP ; et
des moyens pour communiquer, par le premier dispositif informatique sans fil (110) vers le deuxième dispositif informatique sans fil (120), en utilisant la session ASP en réponse à l'établissement de la session ASP,
dans lequel les moyens pour établir la session ASP comprennent en outre des moyens pour établir la session ASP pour un service sans fil annoncé par l'un du premier dispositif informatique sans fil (110) et du deuxième dispositif informatique sans fil (120).

11. Dispositif selon la revendication 10, dans lequel les moyens pour communiquer en utilisant la session ASP comprennent des moyens pour encapsuler des paquets émis en utilisant la session ASP avec un en-tête de protocole d'accès de sous-réseau, SNAP.

12. Dispositif selon la revendication 11, dans lequel l'en-tête SNAP comprend une valeur d'identifiant spécifique de l'organisation Wi-Fi Alliance, OUI, 0x50-6F-9A, et une valeur OUI de Services Wi-Fi Directs de xx-00, xx étant un nombre quelconque compris entre 00 et 255 de façon inclusive.

13. Dispositif selon la revendication 10, dans lequel les moyens pour établir la session ASP comprennent en outre des moyens pour émettre, à partir du premier dispositif informatique sans fil (110) vers le deuxième dispositif informatique sans fil (120), un message ASP qui comprend un attribut qui indique que la session ASP utilise des communications de couche de liaison de données basées sur des adresses MAC ; et
des moyens pour recevoir, par le premier dispositif informatique sans fil (110) à partir du deuxième dispositif informatique sans fil (120), un message ASP qui comprend l'attribut indiquant que la session ASP utilise des communications de couche liaison de données basées sur des adresses MAC.

14. Dispositif selon la revendication 10, dans lequel au moins l'un du premier dispositif informatique sans fil (110) et du deuxième dispositif informatique sans fil (120) comprend un propriétaire de groupe WFDS, GO, et le deuxième dispositif informatique sans fil (120) comprend un client WFDS.

15. Dispositif selon la revendication 14, comprenant en outre :
des moyens pour former, par le WFDS GO, un groupe WFDS avec le client WFDS.
